# EUROPÄISCHE PATENTANMELDUNG

(11) **EP 4 756 257 A1**
(43) Veröffentlichungstag der Anmeldung: **10.06.2026**
(21) Anmeldenummer: 25213882.1
(22) Anmeldetag: 06.11.2025
(51) Int. Cl.: F16H 57/04, F16H 57/08, F03D 15/00

(54) **PLANETENTRÄGER, PLANETENRADSATZ UND WINDKRAFTANLAGE**

(30) Priorität: 06.12.2024 DE 102024211666
(71) Anmelder: ZF Friedrichshafen AG, 88046 Friedrichshafen (DE); ZF Wind Power Antwerpen NV, 3920 Lommel (BE)
(72) Erfinder: Smet, Wim, 9140 Temse (BE); Klein-Hitpass, Arno, 52074 Aachen (DE)
(74) Vertreter: ZF Friedrichshafen AG

(57) **Zusammenfassung**

Die Erfindung betrifft einen Planetenträger (10) mit einem ersten Wandelement (20), einem zweiten Wandelement (22), und einem Planetenbolzen (12). Der Planetenbolzen (12) ist dazu ausgebildet, daran drehbar ein Planetenrad (14) zu lagern. Die Wandelemente (20, 22) sind mit wenigstens einer Spannvorrichtung (30) aneinander befestigt. Der Planetenbolzen (12) wird zwischen den beiden Wandelementen (20, 22) durch die Spannvorrichtung (30) eingespannt. Des Weiteren betrifft die Erfindung einen Planetenradsatz für ein Getriebe, wobei der Planetenradsatz wenigstens einen solchen Planetenträger (10) aufweist. Zudem betrifft die Erfindung eine Windkraftanlage (110).

## Beschreibung

### Technisches Gebiet

Die vorliegende Erfindung bezieht sich auf einen Planetenträger. Zudem bezieht sich die Erfindung auf einen Planetenradsatz und eine Windkraftanlage.

### Stand der Technik

Planetenträger bilden üblicherweise eines der Drehelemente in einem Planetenradsatz eines Getriebes. An dem Planetenträger sind dabei mehrere Planetenräder drehbar gelagert, welche beispielsweise mit einem Sonnenrad und einem Hohlrad kämmen. Das dort übertragene Drehmoment kann dabei zu hohen Lasten auf den Planetenträger führen, welchen dieser ohne übermäßige Deformation widerstehen können soll. Bei einer zu starken Deformation kann es beispielsweise zu einer Abweichung in einem Zahneingriff kommen, welcher zu einem erhöhten Verschleiß führt. Gleichzeitig soll ein Planetenträger aber auch leicht, einfach zu montieren und kostengünstig in der Herstellung sein.

### Darstellung der Erfindung

Ein erster Aspekt betrifft einen Planetenträger für einen Planetenradsatz. Der Planetenradsatz kann beispielsweise Teil eines Getriebes bilden. Das Getriebe kann beispielsweise als Fahrzeuggetriebe oder Getriebe einer Stromerzeugungsanlage, wie einer Windkraftanlage, ausgebildet sein.

Der Planetenträger weist ein erstes Wandelement, ein zweites Wandelement und einen Planetenbolzen auf. An den beiden Wandelementen kann der Planetenbolzen gehalten sein. Die beiden Wandelemente können axial nebeneinander angeordnet sein. Die axiale Richtung, eine radiale Richtung und eine Umfangsrichtung können durch eine Drehachse des Planetenträgers oder auch des gesamten Planetenradsatzes definiert sein.

Die beiden Wandelemente können sich beispielsweise im Wesentlichen radial erstrecken. Das erste Wandelement kann beispielsweise einen Anschlussbereich für eine Eingangswelle, einen Rotor einer Windkraftanlage oder auch eines weiteren Planetenradsatzes ausbilden. Das zweite Wandelement kann beispielsweise einen Anschlussbereich für eine Ausgangswelle, einen Generator einer Windkraftanlage oder auch eines weiteren Planetenradsatzes ausbilden. Die beiden Wandelemente können beispielsweise als Gussteile oder Schmiedeteile ausgebildet sein. Die beiden Wandelemente können auch als Metallplatten ausgebildet sein, welche beispielsweise in einem Stanzverfahren und alternativ oder zusätzlich einem Tiefziehverfahren gefertigt wurden. Durch die hier beschriebene Gestaltung können die beiden Wandelemente trotzdem ausreichend hohe Lasten ohne eine unzulässig hohe Verformung bei geringem Gewicht widerstehen. Zudem kann die Fertigung so kostengünstig sein. Die beiden Wandelemente können mit einem spanenden Verfahren nachbearbeitet sein. Die beiden Wandelemente können voneinander beabstandet sein und alternativ oder zusätzlich im Wesentlichen parallel zueinander ausgerichtet sein, beispielsweise zumindest wenigstens jeweilige einander zugewandten Seiten. Die beiden Wandelemente berühren sich beispielsweise nicht. Das erste Wandelement und das zweite Wandelement können jeweils einstückig ausgebildet sein. Die beiden Wandelemente können zwei separate Bauteile sein. Die Wandelemente können auch mehrteilig ausgebildet sein, beispielsweise um Versteifungen an Anschlussbereichen vorzusehen und alternativ oder zusätzlich Adapter für verschiedene Getriebe nutzen zu können.

Der Planetenbolzen ist dazu ausgebildet, daran drehbar ein Planetenrad zu lagern. Beispielsweise kann das Planetenrad mit einem Gleitlager oder Wälzlager an dem Planetenbolzen gelagert sein. Der Planetenbolzen kann ein zu den beiden Wandelementen separates Bauteil sein. Durch die mehrteilige Gestaltung kann der Planetenbolzen und insgesamt der Planetenträger und der Planetenradsatz einfach montierbar sein. Der Planetenbolzen kann sich mit seiner Haupterstreckungsrichtung axial erstrecken, beispielsweise radial von der Drehachse des Planetenträgers beabstandet. Der Planetenbolzen kann ein metallisches Bauteil sein. Der Planetenträger kann zwei, drei, vier oder mehr Planetenbolzen aufweisen. Die Planetenbolzen können voneinander beabstandet sein. Die Planetenbolzen können gleich gestaltet und auch montiert sein. Jeweilige Erläuterungen im Folgenden gelten für mehrere Planetenbolzen gleichermaßen, sofern anwendbar. An jedem Planetenbolzen ist beispielsweise wenigstens ein oder genau ein zugeordnetes Planetenrad drehbar lagerbar.

Jedes Planetenrad kann ein oder mehrere Verzahnungsbereiche an seinem Außenumfang aufweisen. Der Planetenradsatz kann beispielsweise als Minus-Planetenradsatz oder Plus-Planetenradsatz ausgebildet sein. Die Planetenräder können beispielsweise mit einem Sonnenrad und einem Hohlrad des Planetenradsatzes kämmen. Der Planetenradsatz kann beispielsweise drei Drehelemente aufweisen. Sonnenräder, Hohlräder und Planetenträger können beispielsweise Drehelemente eines Planetenradsatzes ausbilden.

Die Wandelemente sind mit einer Spannvorrichtung aneinander befestigt, wobei der Planetenbolzen bei den aneinander befestigten Wandelemente zwischen den beiden Wandelementen eingespannt wird. Der Planetenbolzen erstreckt sich beispielsweise axial zwischen den beiden Wandelementen. Der Planetenträger kann dazu ausgebildet sein, dass der Planetenbolzen Teile der auf den Planetenträger wirkenden Kräfte aufnimmt. Durch die Einspannung können beispielsweise tangential wirkende Kräfte, welche den Planetenträger tordieren, zwischen den beiden Wandelementen übertragen werden. Die Planetenbolzen können den Planetenträger zusätzlich versteifen, beispielsweise aufgrund deren Einspannung. Bei Planetenträgern mit einstückiger Wand, welche einen Käfig für jeweilige Planetenräder bildet, werden dagegen Kräfte ausschließlich oder zumindest zu einem größeren Teil über die Wände übertragen. Die Planetenbolzen tragen somit nichts oder nur sehr wenig zu einer Steifigkeit eines solchen Planetenträgers bei, weshalb die Wand oder der Käfig dann robuster ausgebildet sein muss. Durch eine wenigstens zweiteilige Gestaltung der Wand des Planetenträgers mit den beiden Wandelementen ergeben sich zudem andere Montagemöglichkeiten, wie ein Stapeln, wodurch die Montage einfacher sein kann.

Das Spannvorrichtung kann beispielsweise ein Spannelement, wie einen Bolzen oder eine Schraube, aufweisen. Zusätzlich kann die Spannvorrichtung ein Konterelement, wie eine Mutter oder eine Platte mit Gewinde, aufweisen. Das Spannelement kann sich beispielsweise durch die beiden oder nur eines der beiden Wandelemente hindurch erstrecken. Beispielsweise kann eine Schraube in einer Durchgangsöffnung des ersten Wandelements angeordnet sein und in einer Gewindebohrung des zweiten Wandelements eingeschraubt sein. Beispielsweise kann sich ein Spannelement durch das erste Wandelement hindurch erstrecken und in einer Gewindebohrung des Planetenbolzens eingeschraubt sein. Ein anderes Spannelement kann sich durch das zweite Wandelement hindurch erstrecken und in einer anderen Gewindebohrung des Planetenbolzens eingeschraubt sein. Die Spannvorrichtung kann für jedes Spannelement einen Spannhebel aufweisen. Dann kann beispielsweise das Einspannen des Planetenbolzens durch ein Umlegen des Hebels statt durch ein Festschrauben erfolgen. Beispielsweise kann eine Schraube in einer Durchgangsöffnung des ersten Wandelements und des zweiten Wandelements angeordnet sein und in einer Gewindebohrung des Konterelements eingeschraubt sein. Die Spannvorrichtung kann auch mehrere voneinander beabstandete Spannelemente aufweisen. Die Spannelemente können beispielsweise korrespondierend zu jeweiligen Planetenbolzen und alternativ oder zusätzlich zu noch im Folgenden beschriebenen Brückenelementen angeordnet sein.

In einer Ausführungsform ist es vorgesehen, dass der Planetenbolzen als hohler Schaft ausgebildet ist. Beispielsweise kann der Planetenbolzen rohrförmig ausgebildet sein. Der Planetenbolzen kann eine dünne umlaufende Wand aufweisen. Der Planetenbolzen kann eine sich axial erstreckende Durchgangsöffnung aufweisen. Die Durchgangsöffnung kann zentral angeordnet sein. Der Planetenbolzen kann auch mehrere sich axial erstreckende Durchgangsöffnungen aufweisen. Der Planetenbolzen kann so sehr leicht sein. Trotzdem kann der Planetenbolzen ein hohes Flächenträgheitsmoment haben und so hohe Kräfte in Umfangsrichtung aufnehmen und zwischen den beiden Wandelementen übertragen. Der Planetenbolzen kann Durchgangsöffnungen für die Spannelemente aufweisen und zusätzlich eine oder mehrere Durchgangsöffnungen, in welchen keine Spannelemente angeordnet sind. Alternativ kann der Planetenbolzen statt als hohler Schaft beispielsweise auch als massiver Stift ohne Durchgangsöffnung ausgebildet sein.

In einer Ausführungsform ist es vorgesehen, dass ein Spannelement der Spannvorrichtung innerhalb des Planetenbolzen angeordnet ist. Beispielsweise erstreckt sich das Spannelement durch den Planetenbolzen axial hindurch. Die Wandung des Planetenbolzen umgibt das Spannelement dann radial. Beispielsweise ist das Spannelement in der Durchgangsöffnung des hohlen Schafts angeordnet oder in einer weiteren dedizierten Durchgangsöffnung in der Wandung des Planetenbolzens. Durch diese Anordnung kann der Planetenträger besonders kompakt sein. Zudem kann der Planetenbolzen so besonders gleichmäßig eingespannt werden. Außerdem können die Spannelemente ein Herausfallen des Planetenbolzens vor einem Festspannen in der Montageposition verhindern. Die Wandung des Planetenbolzens kann das Spannelement radial einfassen. Es können beispielsweise auch mehrere Spannelemente innerhalb des Planetenbolzens angeordnet sein. Die Spannelemente können dabei voneinander beabstandet sein. Es können auch einige Spannelemente innerhalb und einige Spannelemente außerhalb von jeweiligen Planetenbolzen angeordnet sein.

In einer Ausführungsform ist es vorgesehen, dass der Planetenträger eine Hülse aufweist, welche innerhalb des Planetenbolzen angeordnet ist. Die Hülse kann als hohler Schaft ausgebildet sein, welche einen geringeren Durchmesser als der Planetenbolzen aufweist. Die Hülse kann aber auch massiv ausgebildet sein, beispielsweise stiftförmig. An der Hülse wird beispielsweise kein Planetenrad gelagert. Ansonsten kann die Hülse wie ein Planetenbolzen ausgebildet und alternativ oder zusätzlich befestigt sein. Beispielsweise erstreckt sich die Hülse axial zwischen den beiden Wandelementen und wird dort eingespannt. Die Hülse kann zusätzlich zu den Planetenbolzen Kräfte zwischen den beiden Wandelementen übertragen und den Planetenträger so verstärken. Ein oder mehrere Spannelemente können zwischen der Hülse und dem Planetenbolzen angeordnet sein. Ein oder mehrere Spannelemente können auch innerhalb der Hülse angeordnet sein. Die Hülse kann beispielsweise Spannelemente bei der Montage führen, beispielsweise wenigstens die Spannelemente zwischen der Hülse und dem Planetenbolzen oder Spannelemente innerhalb der Hülse. Dadurch kann die Montage des Planetenträgers vereinfacht sein.

In einer Ausführungsform ist es vorgesehen, dass der Planetenträger eine Ölführung zu der Lagerung des Planetenrads an dem Planetenbolzen ausbildet. Wenigstens ein Teil der Ölführung kann durch den Planetenbolzen gebildet sein. Beispielsweise kann der als hohler Schaft ausgebildete Planetenbolzen mit seiner Durchgangsöffnung einen ersten axialen Ölkanal der Ölführung ausbilden. Zudem kann der Planetenbolzen ein oder mehrere radiale Durchgangsöffnung zu einem Lagerbereich des zugehörigen Planetenrads ausbilden. Dort kann dann Öl zu der Lagerung des Planetenrads fließen, beispielsweise unterstützt durch eine Zentrifugalkraft. Durch die Ölführung und damit Schmierung kann beispielsweise direkt an der Lagerung des Planetenrads an dem Planetenbolzen geschmiert werden, wodurch eine notwendige Ölmenge geringer und die Schmierung besonders zuverlässig sein kann. Für die Ölversorgung kann das Getriebe oder der Planetenradsatz ein Ölführungselement aufweisen, wie eine sich radiale Scheibe mit Ölführung axial in Richtung zu einem der beiden Wandelemente. Dieses Ölführungselement kann axial benachbart zu einem der beiden Wandelemente angeordnet sein. Beispielsweise kann in wenigstens einem der beiden Wandelemente eine Durchgangsöffnung zu dem Planetenbolzen vorgesehen sein, welche sich von einer dem anderen Wandelement abgewandten Seite zu einer dem anderen Wandelement zugewandten Seite erstreckt.

Ein Ölkanal der Ölführung kann zwischen dem Planetenbolzen und der Hülse ausgebildet sein. Dieser Ölkanal für eine aktive Schmierung der Lagerung des Planetenrads ausgebildet sein. Beispielsweise kann eine aktive Schmierung eine Schmierung sein, bei welcher ein Druck durch eine Pumpe oder anderweitig erzeugt wird, ohne dass zwingend eine Drehung des Planetenträgers für eine Versorgung notwendig ist. Der Ölkanal kann im Wesentlichen dicht und bedruckbar sein.

In einer Ausführungsform ist es vorgesehen, dass innerhalb der Hülse ein Ölreservoir für eine passive Schmierung ausgebildet ist. Dieses Ölreservoir kann beispielsweise durch den zuvor beschriebenen Ölkanal oder auch eine weitere Durchgangsöffnung in einem der Wandelemente versorgt werden. Das Ölreservoir wird beispielsweise durch einen Innenraum der Hülse gebildet und axial durch die Wandelemente wenigstens teilweise begrenzt. Das Ölreservoir kann mit dem zuvor beschriebenen Ölkanal oder auch einer weiteren radialen Durchgangsöffnung mit der Lagerung des Planetenrads zu dessen Schmierung verbunden sein. Die passive Schmierung kann eine Schmierung sein, welche durch die Drehung des Planetenträgers und entsprechende Fliehkräfte bewirkt wird. Die passive Schmierung kann beispielsweise bei Ausfall der aktiven Schmierung wirken und alternativ oder zusätzlich eine Notfallschmierung sicherstellen. So kann beispielsweise eine Grundversorgung der Lagerung sichergestellt werden, bis der Betrieb eingestellt wird oder eine Wartung erfolgt. Gerade bei aufwendig zu wartenden Anlagen, wie Windkraftanlagen, kann so der Betrieb aufrechterhalten werden oder zumindest eine nur sehr aufwendig zu reparierende Beschädigung vermieden werden. Aufgrund der Größe von Planetenbolzen in Windkraftanlagen kann das Ölreservoir in der Hülse dafür sehr einfach ausreichend groß sein.

In einer Ausführungsform ist es vorgesehen, dass der Planetenbolzen zweiteilig ausgebildet ist. Beispielsweise wird der Planetenbolzen nur durch das Einspannen zusammengehalten. Der Planetenbolzen kann beispielsweise axial geteilt sein. Ein erster Teil kann beispielsweise nur in Kontakt mit dem erstem der beiden Wandelemente stehen und ein zweites Teil nur in Kontakt mit dem zweiten der beiden Wandelemente. An deren Kontaktstelle miteinander können die beiden Teile beispielsweise eine Stufe, einen Absatz, eine Ausnehmung oder sonstige Sitzflächen aufweisen. Durch die zweiteilige Bauweise kann eine Montage vereinfacht sein. Der Planetenbolzen kann alternativ aber auch einstückig ausgebildet sein.

In einer Ausführungsform ist es vorgesehen, dass das erste Wandelement einen ersten Sitz ausbildet, an welchem der Planetenbolzen angeordnet ist. Alternativ oder zusätzlich kann das zweite Wandelement einen zweiten Sitz ausbilden, an welchem der Planetenbolzen angeordnet ist. Durch den jeweiligen Sitz kann eine Kraftübertragung an dem Planetenbolzen verbessert werden. Zudem kann der jeweilige Sitz eine Zentrierung des Planetenbolzen verbessern und eine Montage erleichtern. Ein Sitz kann beispielsweise durch vorstehende Bereiche und alternativ oder zusätzlich Ausnehmungen gebildet sein. Die Bereiche können beispielsweise axial vorstehen oder axial ausgenommen sein. Der Planetenbolzen kann dazu korrespondierende Bereiche aufweisen, in welche der Sitz eingreifen.

In einer Ausführungsform ist es vorgesehen, dass der jeweilige Sitz als eine Vertiefung in einer dem Planetenbolzen zugewandten Seite des jeweiligen Wandelements ausgebildet ist. Diese Seite kann auch dem Planetenrad und alternativ oder zusätzlich dem anderen Wandelement zugewandt sein. Die Vertiefung kann beispielsweise als umlaufende Nut ausgebildet sein. Beispielsweise kann die Vertiefung in deren Form zu einer Querschnittsform des Planetenbolzen korrespondieren. Beispielsweise kann der Sitz durch eine ringförmige Vertiefung gebildet sein, welche zu einem runden Querschnitt eines zylindrischen als hohler Schaft ausgebildeten Planetenbolzen korrespondiert. Alternativ oder zusätzlich kann das Wandelement auch vorstehende Bereiche aufweisen, welche den Sitz ausbilden. Beispielsweise kann ein vorstehender Ring in eine zentrale Durchgangsöffnung des Planetenbolzen eingreifen.

In einer Ausführungsform ist es vorgesehen, dass sich der jeweilige Sitz von dem Planetenbolzen weg verjüngt. Zum Beispiel kann der Sitz von dem Planetenbolzen axial weg konisch zulaufen oder anderweitig schmaler werden. Ein Boden einer den Sitz bildenden Nut kann schmaler sein als deren oberseitige Öffnung. Durch die Verjüngung kann der Planetenbolzen durch das Einspannen auch in Umfangsrichtung gepresst werden. So können tangentiale Kräfte besonders gut übertragen werden. Zudem kann durch die Verjüngung der Planetenbolzen bei dem Einspannen zusätzlich zentriert werden.

In einer Ausführungsform ist es vorgesehen, dass der Planetenträger ein Brückenelement aufweist, welches bei den aneinander befestigten Wandelemente zwischen den beiden Wandelementen durch die Spannvorrichtung eingespannt wird. Das Brückenelement kann radial außen zu dem oder den Planetenbolzen angeordnet sein. Das Brückenelement bildet eine zusätzliche Versteifung des Planetenträgers zwischen den beiden Wandelementen. Das Brückenelement ist beispielsweise ein metallisches Bauteil, wie ein Gussteil oder ein Schmiedeteil. Das Brückenelement kann ein zu den beiden Wandelementen separates Bauteil sein.

Statt eines Brückenelements kann auch ein Brückenabschnitt integral an einem der beiden Wandelemente ausgebildet sein, welches dann analog zu dem Brückenelement gestaltet sein kann und im Folgenden auch als Brückenelement bezeichnet wird, obwohl es kein separates Bauteil bildet. Das Brückenelement weist beispielsweise ein oder mehrere Durchgangsöffnung auf, durch welche sich jeweilige Spannelemente der Spannvorrichtung erstrecken. Das Brückenelement erstreckt sich beispielsweise axial zwischen den beiden Wandelemente oder zumindest zwischen den zwei Seiten der Wandelemente, welche dem Planetenbolzen zugewandt sind. Das Brückenelement kann so wie Planetenbolzen befestigt sein, beispielsweise mit zugeordneten Sitzen an den beiden Wandelementen. Durch die Anordnung radial außen zu dem Planetenbolzen oder den Planetenbolzen kann das Brückenelement eine Torsionssteifigkeit des Planetenträgers besonders stark erhöhen. Es können beispielsweise auch mehrere Brückenelemente vorgesehen sein. Die Ausführungen für ein Brückenelement können gleichermaßen für alle Brückenelemente gelten, sofern anwendbar.

In einer Ausführungsform ist es vorgesehen, dass das Brückenelement in Umfangsrichtung beabstandet zu dem Planetenbolzen angeordnet ist. Beispielsweise kann das Brückenelement in Umfangsrichtung zwischen zwei Planetenbolzen angeordnet sein. Dadurch kann ein großer Platz für die Planetenräder verbleiben und zudem ein Bauraumkonflikt mit Verzahnungsbereichen vermieden werden.

In einer Ausführungsform ist es vorgesehen, dass zwischen wenigstens dem ersten Wandelement und dem Brückenelement ein Passstift angeordnet ist. Alternativ oder zusätzlich kann zwischen wenigstens dem zweiten Wandelement und dem Brückenelement ein Passstift angeordnet sein. Es können dort auch jeweils mehrere Passstifte angeordnet sein. Durch den jeweiligen Passstift kann mit einfachen Mitteln eine Kraftübertragung zwischen dem Brückenelement und jeweiligen Wandelementen zur Versteifung des Planetenträgers verbessert werden.

In einer Ausführungsform ist es vorgesehen, dass der Planetenträger wenigstens zwei in Umfangsrichtung voneinander beabstandete Planetenbolzen aufweist. Das erste Wandelement kann im Umfangsbereich zwischen den zwei Planetenbolzen eine Ausnehmung aufweisen. Alternativ oder zusätzlich kann das zweite Wandelement im Umfangsbereich zwischen den zwei Planetenbolzen eine Ausnehmung aufweisen. Pro Paar von in Umfangsrichtung benachbarten Planetenbolzen kann eine Ausnehmung vorgesehen sein. Die Ausnehmung kann beispielsweise als Ausbuchtung ausgebildet sein. Die Wandelemente können aufgrund der Ausnehmungen bei drei Planetenbolzen auch eine im Wesentlichen dreieckige Grundform aufweisen. Durch die Ausnehmung kann der Planetenträger leicht sein und wenig Material benötigen und dabei keine oder nur wenig für den Betrieb relevante Steifigkeit einbüßen.

Ein zweiter Aspekt betrifft einen Planetenradsatz für ein Getriebe. Der Planetenradsatz kann den Planetenträger gemäß dem ersten Aspekt aufweisen. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Der Planetenradsatz kann beispielsweise noch mindestens ein Sonnenrad und alternativ oder zusätzlich mindestens ein Hohlrad aufweisen. Der Planetenradsatz kann pro Planetenbolzen des Planetenträgers ein daran drehbar gelagertes Planetenrad aufweisen. Der Planetenradsatz kann beispielsweise Teil eines Getriebes einer Windkraftanlage oder eines Fahrzeugs bilden.

Ein dritter Aspekt betrifft eine Windkraftanlage. Die Windkraftanlage weist ein Planetenradsatz gemäß dem zweiten Aspekt auf. Alternativ oder zusätzlich kann die Windkraftanlage den Planetenträger gemäß dem ersten Aspekt aufweisen. Jeweilige Vorteile und weitere Merkmale sind der Beschreibung des ersten und des zweiten Aspekts zu entnehmen, wobei Ausgestaltungen des ersten bzw. zweiten Aspekts auch Ausgestaltungen des dritten Aspekts und umgekehrt bilden. Die Windkraftanlage kann einen Turm und eine daran angeordnete Gondel aufweisen. Die Gondel kann beispielsweise drehbar oder drehfest an dem Turm gelagert sein. Die Windkraftanlage kann beispielsweise einen Rotor und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind.

### Kurze Beschreibung der Figuren

Fig. 1 veranschaulicht in einer schematischen Perspektivansicht beispielhaft einen Planetenträger mit zwei Wandelementen, welche zusammen einstückig ausgebildet sind.
Fig. 2 veranschaulicht in einer schematischen Perspektivansicht ausschnittsweise eine erste Ausführungsform eines Planetenträger mit zwei separaten Wandelementen in einer Explosionsdarstellung.
Fig. 3 veranschaulicht in einer schematischen Perspektivansicht den Planetenträger gemäß Fig. 2.
Fig. 4 veranschaulicht in einer schematischen Perspektivansicht eine zweite Ausführungsform des Planetenträgers.
Fig. 5 veranschaulicht in einer schematischen Schnittansicht eine erste Variante einer Befestigung eines Planetenbolzens an den zwei separaten Wandelementen des Planetenträgers.
Fig. 6 veranschaulicht in einer schematischen Schnittansicht eine zweite Variante der Befestigung des Planetenbolzens an den zwei separaten Wandelementen des Planetenträgers.
Fig. 7 veranschaulicht in einer schematischen Schnittansicht eine dritte Variante der Befestigung des Planetenbolzens an den zwei separaten Wandelementen des Planetenträgers.
Fig. 8 veranschaulicht schematisch in einer Schnittansicht eine erste Variante einer Ölführung zur Schmierung einer Lagerung eines Planetenrads an dem Planetenbolzen.
Fig. 9 veranschaulicht schematisch in einer Schnittansicht eine zweite Variante der Ölführung zur Schmierung der Lagerung des Planetenrads an dem Planetenbolzen.
Fig. 10 veranschaulicht in einer schematischen Schnittansicht eine dritte Variante der Befestigung des Planetenbolzens an den zwei separaten Wandelementen des Planetenträgers.
Fig. 11 veranschaulicht in einer schematischen Schnittansicht eine vierte Variante der Befestigung des Planetenbolzens an den zwei separaten Wandelementen des Planetenträgers.
Fig. 12 veranschaulicht in einer schematischen Schnittansicht eine erste Variante einer Anordnung von Spannelementen einer Spannvorrichtung, mittels welcher die beiden separaten Wandelemente des Planetenträgers aneinander befestigt sind.
Fig. 13 veranschaulicht in einer schematischen Schnittansicht eine zweite Variante der Anordnung von Spannelementen der Spannvorrichtung, mittels welcher die beiden separaten Wandelemente des Planetenträgers aneinander befestigt sind.
Fig. 14 veranschaulicht in einer schematischen Schnittansicht eine dritte Variante der Anordnung von Spannelementen der Spannvorrichtung, mittels welcher die beiden separaten Wandelemente des Planetenträgers aneinander befestigt sind.
Fig. 15 veranschaulicht in einer schematischen Schnittansicht eine vierte Variante der Anordnung von Spannelementen der Spannvorrichtung, mittels welcher die beiden separaten Wandelemente des Planetenträgers aneinander befestigt sind.
Fig. 16 veranschaulicht in einer schematischen Schnittansicht eine fünfte Variante der Anordnung von Spannelementen der Spannvorrichtung, mittels welcher die beiden separaten Wandelemente des Planetenträgers aneinander befestigt sind.
Fig. 17 veranschaulicht in einer schematischen Schnittansicht eine sechste Variante der Anordnung von Spannelementen der Spannvorrichtung, mittels welcher die beiden separaten Wandelemente des Planetenträgers aneinander befestigt sind.
Fig. 18 veranschaulicht in einer schematischen Schnittansicht eine siebte Variante der Anordnung von Spannelementen der Spannvorrichtung, mittels welcher die beiden separaten Wandelemente des Planetenträgers aneinander befestigt sind.
Fig. 19 veranschaulicht schematisch in einer entrollten Darstellung des Planetenträgers eine erste Variante der Befestigung der beiden separaten Wandelemente aneinander mittels der Spannvorrichtung.
Fig. 20 veranschaulicht schematisch in einer entrollten Darstellung des Planetenträgers eine zweite Variante der Befestigung der beiden separaten Wandelemente aneinander mittels der Spannvorrichtung.
Fig. 21 veranschaulicht schematisch in einer entrollten Darstellung des Planetenträgers eine dritte Variante der Befestigung der beiden separaten Wandelemente aneinander mittels der Spannvorrichtung.
Fig. 22 veranschaulicht schematisch in einer entrollten Darstellung des Planetenträgers eine vierte Variante der Befestigung der beiden separaten Wandelemente aneinander mittels der Spannvorrichtung.
Fig. 23 veranschaulicht schematisch eine Windkraftanlage.

### Detaillierte Beschreibung von Ausführungsformen

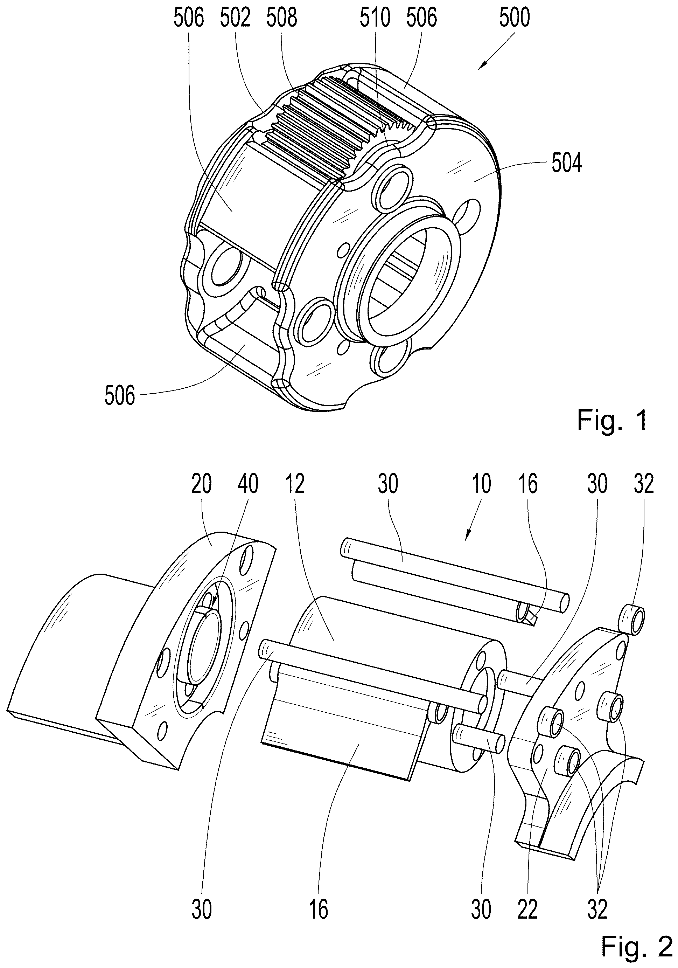

Fig. 1 veranschaulicht in einer schematischen Perspektivansicht einen herkömmlichen Planetenträger 500. Der Planetenträger 500 weist axial gegenüberliegende Wandelemente 502, 504 auf, welche einstückig ausgebildet sind.

Zwischen den beiden Wandelementen 502, 504 erstrecken sich radial außen Brückenelemente 506, welche einstückig mit den Wandelementen 502, 504 ausgebildet sind. An dem Planetenträger 500 sind mehrere Planetenräder 508 drehbar gelagert, von denen hier zur Übersichtlichkeit nur eines dargestellt ist. Dafür weist der Planetenträger 500 pro Planetenrad 508 einen Planetenbolzen 510 auf. Die Planetenbolzen 510 werden zur Montage mit dem bereits aufgeschobenen zugeordneten Planetenrad 508 zwischen die beiden Wandelemente 502, 504 radial von außen nach innen eingesetzt. In deren Endposition werden die Planetenbolzen 510 dann beidseitig, also an den beiden Wandelementen 502, 504, befestigt. In dem gezeigten Beispiel wird dafür endseitig der Planetenbolzen 510 mit dem jeweiligen Wandelement 502, 504 verschraubt, in einer Ausführungsform unter Nutzung von einer zusätzlichen Endplatte pro Ende. Der Planetenträger 500 bildet einen Käfig für die Planetenräder 508 und auch die Planetenbolzen 510 aus.

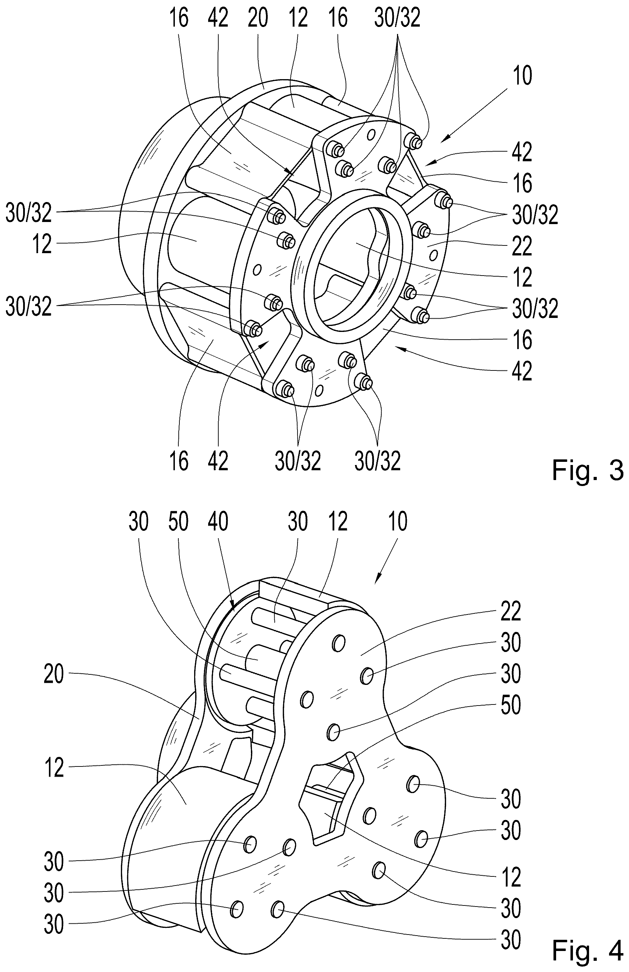

Fig. 2 und Fig. 3 veranschaulichen einen Planetenträger 10 mit einem mehrteiligen Aufbau von dessen Wänden. Wie besonders gut in Fig. 2 zu erkennen ist, weist der Planetenträger 10 ein erstes Wandelement 20 und ein zweites Wandelement 22 auf, welche als separate Bauteile ausgebildet sind. Der Planetenträger 10 bildet in dem hier gezeigten Beispiel einen Teil eines Getriebes einer Windkraftanlage. Der Planetenträger 10 weist eine zentrale Durchgangsöffnung auf, welche koaxial zu einer Drehachse des Planetenträgers 10 ist und durch welche eine Welle des Getriebes hindurchgeführt werden kann.

Zwischen den beiden Wandelement 20, 22 erstrecken sich axial mehrere Planetenbolzen 12, welche als hohler und rohrförmiger Schaft mit zentraler Durchgangsöffnung ausgebildet sind. An jedem Planetenbolzen 12 ist ein Planetenrad 14 drehbar gelagert. Die beiden Wandelemente 20, 22 sind mit einer Spannvorrichtung aneinander befestigt. Die Spannvorrichtung presst dabei die Wandelemente 20, 22 aufeinander zu. Die Planetenbolzen 12 sind dabei zwischen den beiden Wandelementen 20, 22 eingespannt. Die Planetenbolzen 12 halten die beiden Wandelemente 20, 22 so in einem gewünschten Abstand und übertragen Kräfte zwischen den beiden Wandelementen 20, 22 in Umfangsrichtung beim Betrieb der Windkraftanlage. Zusätzlich sind in einigen Ausführungsformen, wie in Fig. 2 und Fig. 3 gezeigt, zwischen den beiden Wandelementen 20, 22 noch Brückenelemente 16 eingespannt, welche sich ebenfalls axial zwischen den beiden Wandelementen 20, 22 erstrecken und radial außen an den beiden Wandelementen 20, 22 angeordnet sind. Die Brückenelemente 16 dienen ebenfalls zu einem Halten des Abstands und dem Übertragen von Kräften zwischen den beiden Wandelementen 20, 22. Die Brückenelemente 16 sind radial außen zu den Planetenbolzen 12 angeordnet und in Umfangsrichtung jeweils zwischen zwei benachbarten der Planetenbolzen 12. Die Brückenelemente 16 sind in dem in Fig. 2 und Fig. 3 gezeigten Beispiel als separate Bauteile ausgebildet. Der Planetenträger 10 bildet mit den beiden Wandelementen 20, 22 und den Brückenelementen 16 einen Käfig für die Planetenräder 14 und auch die Planetenbolzen 12 aus.

Die Spannvorrichtung weist in der in Fig. 2 und Fig. 3 gezeigten ersten Ausführungsform des Planetenträgers 10 eine Vielzahl von Spannelementen 30 auf.

In einer die zentrale Durchgangsöffnung begrenzenden Wandung des Planetenbolzens 12 sind vier Durchgangsöffnungen vorgesehen, in welchen jeweils eine Schraube oder ein Bolzen als Spannelement 30 angeordnet ist. Zudem weisen die Brückenelemente 16 an jedem Endbereich in Umfangsrichtung eine Durchgangsöffnung auf, in welcher jeweils eine Schraube oder ein Bolzen als Spannelement 30 angeordnet ist. Außenseitig auf einer dem Planetenbolzen 12 abgewandten Seite ist wenigstens an einem der beiden Wandelemente 20, 22 pro Spannelement 30 ein Konterelement 32, hier als Mutter ausgebildet, angeordnet. Die Spannelemente 30 erstrecken sich dabei durch zugeordnete Durchgangsöffnungen des jeweiligen Wandelements 20, 22, um auch durch die Konterelemente 32 geführt zu werden. Die Spannelemente 30 können also je nach Gestaltung beidseitig oder einseitig von einer Stirnseite des Planetenträgers 10 angezogen werden, um die Planetenbolzen 12 und die Brückenelemente 16 einzuspannen und den Planetenträger 10 zu montieren. Dabei wird auch eine Montage mit einem stapelnden Zusammensetzen ermöglicht. In einer Montagevariante wird eines der beiden Wandelemente 20, 22 auf seine Stirnseite gelegt. Die verschiedenen Bauteile und auch die Planetenräder 14 werden nacheinander auf das jeweilige der beiden Wandelemente 20, 22 gestapelt. Gerade bei sehr großen und schweren Planetenträgern 10 kann so die Montage erheblich erleichtert werden.

Wie weiterhin in Fig. 2 gut zu erkennen ist, weist das erste Wandelement 20 einen Sitz 40 für jeden der Planetenbolzen 12 auf einer dem zweiten Wandelement 22 und damit auch den Planetenrädern 14 und den Planetenbolzen 12 zugewandten Seite auf. Der Sitz 40 ist als kreisförmige Vertiefung und damit Nut ausgebildet, welche mit einer Form der Wandung des Planetenbolzens 12 korrespondiert. Der Planetenbolzen 12 kann hier eingesetzt werden und liegt dann an seinem Außenumfang und Innenumfang bereichsweise an dem ersten Wandelement 20 an. Dadurch können dort besonders gut Kräfte in Umfangsrichtung und auch radialer Richtung übertragen werden. Das zweite Wandelement 22 weist in einer Ausführungsform einen entsprechend Sitz 40 auf, welcher in Fig. 2 jedoch nicht zu erkennen ist.

In Fig. 3 ist zudem zu erkennen, dass zumindest das zweite Wandelement 20 in Umfangsrichtung zwischen zwei benachbarten Planetenbolzen 12 eine Ausnehmung 42 aufweist, welche sich im Bereich der Brückenelemente 16 erstreckt. Das zweite Wandelement 22 ist also nicht als in Umfangsrichtung im Wesentlichen durchgehende Platte mit Grundform eines Kreises ausgebildet, wie das zweite Wandelement 504 bei dem Planetenträger 500 gemäß Fig. 1. Das erste Wandelement 20 ist durchgehend ohne Ausnehmungen ausgebildet. In einer Variante kann das erste Wandelement auch Ausnehmungen 42 aufweisen.

Fig. 4 zeigt eine zweite Ausführungsform des Planetenträgers 10. Es werden lediglich Unterschiede zu der ersten Ausführungsform gemäß Fig. 2 und Fig. 3 beschrieben. Der Planetenträger 10 weist nun nur noch drei Planetenbolzen 12 statt vier Planetenbolzen 12 auf. Die Brückenelemente 16 entfallen. Es sind nun Ausnehmungen in Umfangsrichtung zwischen den benachbarten Planetenbolzen 12 bei beiden Wandelementen 20, 22 vorgesehen, wodurch sich eine dreieckige Grundform der beiden Wandelemente 20, 22 ergibt. Die Planetenbolzen 12 ragen bis zu einem radialen Rand der beiden Wandelemente 20, 22. Die Planetenbolzen 12 sind geschnitten dargestellt. Dadurch ist erkennbar, dass die Spannelemente 30 nun nicht mehr in zugeordneten Durchgangsöffnungen der Wandungen der Planetenbolzen 12 angeordnet sind. Stattdessen sind pro Planetenbolzen 12 vier zueinander beabstandete Spannelemente 30 vorgesehen, welche innerhalb der zentralen Durchgangsöffnung des jeweiligen Planetenbolzens 12 angeordnet sind. Zudem ist der Planetenträger 10 bei der zweiten Ausführungsform von einer Seite gezeigt, bei welcher die Spannelemente 30 mit einem Kopf auf dem zweiten Wandelement 22 anliegen.

Zudem weist die zweite Ausführungsform des Planetenträgers 10 pro Planetenbolzen 12 eine Hülse 50 auf, welche innerhalb des Planetenbolzens 12 angeordnet ist. Diese Hülse 50 ist in einer Variante als massiver Stift ausgebildet und in einer anderen Variante als hohler Schaft. Die Hülse 50 dient als Abstandselement bei der Montage. In einer Ausführungsform ist für die Hülsen 50 in den beiden Wandelementen 20, 22 jeweils ein Sitz vorgesehen, welcher analog zu dem Sitz 40 für die Planetenbolzen 12 ausgebildet ist. Die Hülsen 50 sind dann eingespannt und übertragen ebenfalls Kräfte, wodurch der Planetenträger 10 zusätzlich versteift ist. Die Hülsen 50 sind in einer Variante einstückig mit einem der beiden Wandelemente 20, 22 ausgebildet und in einer anderen Variante jeweils als separates Bauteil.

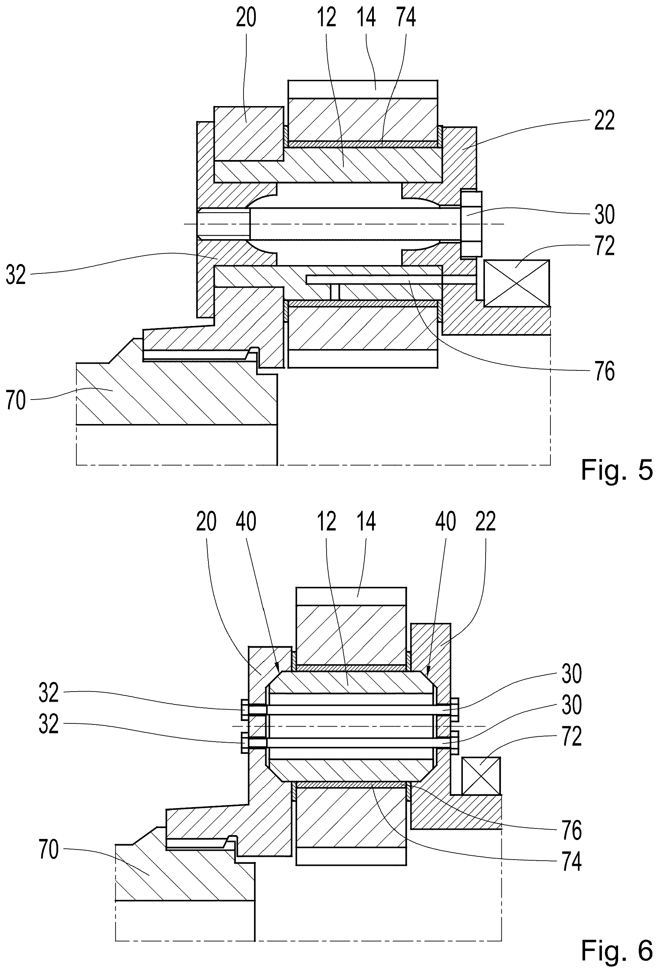

In Fig. 5 sind in einer Schnittansicht Details der Befestigung eines der Planetenbolzen 12 an den beiden Wandelementen 20, 22 sowie auch weitere Details des Planetenradsatzes mit dem Planetenträger 10 gezeigt. Mit dem ersten Wandelement 20 ist ein Sonnenrad 70 eines weiteren Planetenradsatzes durch eine Verzahnung verbunden. Das zweite Wandelement 22 ist über ein Wälzlager 72 gelagert. Das Planetenrad 14 ist über ein Gleitlager 74 an dem Planetenbolzen 12 gelagert. In der Wandung des Planetenbolzens 12 ist ein Ölkanal 76 zur Schmierung des Gleitlagers 74 ausgebildet. Das Konterelement 32 ist hier als Platte ausgebildet, welche stirnseitig an dem ersten Wandelement 20 auf einer dem Planetenrad 14 abgewandten Seite anliegt. Zudem weist das Konterelement 32 einen axialen Vorsprung auf, welcher in den Planetenbolzen 12 im Bereich des ersten Wandelements 20 hineinragt. Das erste Wandelement 20 weist eine Durchgangsöffnung auf, in welcher der Planetenbolzen 12 mit einem Endbereich anliegt. Zudem bildet der Planetenbolzen 12 an diesem Endbereich eine Stufe aus, sodass der Planetenbolzen 12 auch stirnseitig an dem ersten Wandelement 12 an einer dem Planetenrad 14 zugewandten Seite anliegt. Das zweite Wandelement 22 weist einen Vorsprung auf, welcher an einem benachbarten Endbereich des Planetenbolzens 12 in den Planetenbolzen 12 hineinragt. So wird bei beiden Wandelementen 20, 22 ein Sitz für den Planetenbolzen 12 ausgebildet, welcher eine Montageposition definiert und zudem eine Kraftübertragung in Umfangsrichtung ermöglicht. Das zweite Wandelement 22 weist eine zentrale Durchgangsöffnung auf, durch welche das Spannelement 30 in Form einer Schraube ragt. Das Konterelement 32 weist eine zentrale Gewindebohrung auf, mit welcher das Spannelement 30 verschraubt ist.

In Fig. 6 ist eine Abwandlung der Gestaltung von Fig. 5 gezeigt. Es werden nur Unterschiede erläutert. Es sind nun mehrere Spannelemente 30 pro Planetenbolzen 30 vorgesehen. Das Konterelement 32 ist nun nicht mehr als Platte ausgebildet, sondern als simple Kontermutter. Vorliegend ist das Konterelement 32 außenseitig an dem ersten Wandelement 20 angeordnet. In einer Variante ist das Konterelement 32 auch an dem zweiten Wandelement 22 außenseitig angeordnet. In noch einer Variante weist das Spannelement 30 beidseitig ein Gewinde auf und pro Spannelement 30 werden zwei Konterelemente 32 genutzt.

Der Sitz 40 ist bei den beiden Wandelementen 20, 22 zudem anders ausgebildet. Es ist nun eine kreisförmige Vertiefung ohne zentralen Teil, welcher nicht vertieft ist, vorgesehen. Die Vertiefung verjüngt sich bei jedem der Wandelemente 20, 22 in einer Richtung axial von dem Planetenrad 14 und damit dem anderen der beiden Wandelemente 22, 20 weg. Die eingesetzten Endbereiche der Planetenbolzen 12 verjüngen sich dazu korrespondierend. Bei dem Einspannen der Planetenbolzen 12 werden die Endbereiche von außen radial in dem jeweiligen Sitz 40 gepresst, wodurch eine Kraftübertragung und eine Zentrierung verbessert sein können.

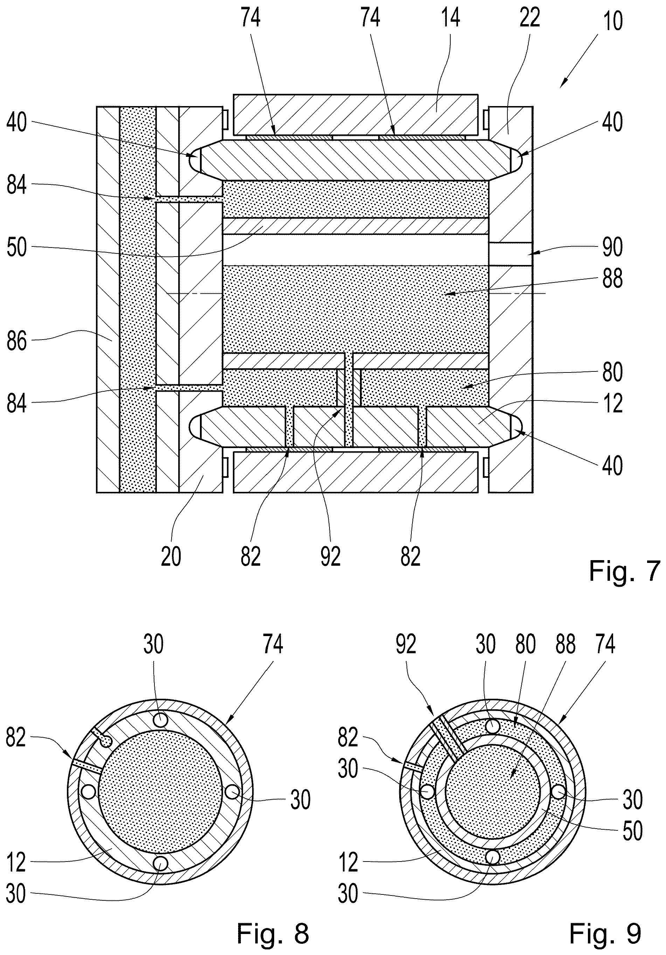

In Fig. 7 ist eine Abwandlung der Gestaltung von Fig. 6 gezeigt. Es werden nur Unterschiede erläutert. Die Spannelemente 30 sind in dieser schematischen Darstellung zur Übersichtlichkeit nicht dargestellt. Diese Variante weist nun wieder die Hülse 50 auf. Die Hülse 50 ist als hohler Schaft ausgebildet. Der Planetenträger 10 bildet eine Ölführung zu der Lagerung des Planetenrads 14 an jedem Planetenbolzen 12 aus. Radial zwischen der Hülse 50 und dem Planetenbolzen 12 ist ein Ölkanal 80 ausgebildet, welcher durch radiale Durchgangsöffnungen 82 mit dem Gleitlager 74 des Planetenrads 14 zu dessen Schmierung verbunden ist. Der Ölkanal 80 ist zudem über eine axiale Durchgangsöffnung 84 in dem ersten Wandelement 20 mit Öl versorgbar. Axial neben dem ersten Wandelement 20 ist ein Ölverteilungsring 86 angeordnet, wodurch der Ölkanal 80 mit einer Druckversorgung zur aktiven Schmierung der Gleitlager 74 fluidisch verbunden ist. Innerhalb der Hülse 50 ist zudem ein Ölreservoir 88 ausgebildet. Dieses Ölreservoir 88 wird über eine axiale Durchgangsöffnung 90 in dem zweiten Wandelement 22 passiv oder aktiv mit Öl versorgt. Das Ölreservoir 88 ist nicht zwingend bedruckt. Das Ölreservoir 88 ist zudem über einen radialen Kanal 92, welcher durch eine radiale Durchgangsöffnung in der Hülse 50 und dem Planetenbolzen 12 verläuft, mit den jeweiligen Gleitlagern 74 zu deren Schmierung verbunden. Das Ölreservoir 88 schmiert die jeweiligen Gleitlager 74 passiv durch Fliehkraft bei einer Rotation des Planetenträgers 10 und damit auch bei einem Ausfall der aktiven Schmierung. Fig. 9 veranschaulicht diese Gestaltung der Ölführung nochmals in einer weiteren Schnittansicht.

In der Gestaltung von Fig. 7 ist zudem der Sitz 40 für den Planetenbolzen 12 in jedem der beiden Wandelemente 20, 22 anders ausgebildet. Der Sitz 40 wird nun wieder durch eine ringförmige Vertiefung gebildet. Diese verjüngt sich in eine axiale Richtung von dem Planetenradsatz 14 weg, ähnlich wie der Sitz 40 bei der Gestaltung von Fig. 6. Auch die Wandung des Planetenbolzens 12 verjüngt sich dazu korrespondierend in jedem Endbereich. Der Planetenbolzen 12 kann so gut in den jeweiligen Sitz 40 gepresst werden.

In Fig. 8 ist eine Variante einer Ölführung ohne die Hülse 50 dargestellt. Der Ölkanal zur Schmierung der Gleitlager 74 ist nun einfach durch die zentrale Durchgangsöffnung in dem Planetenbolzen 12 ausgebildet.

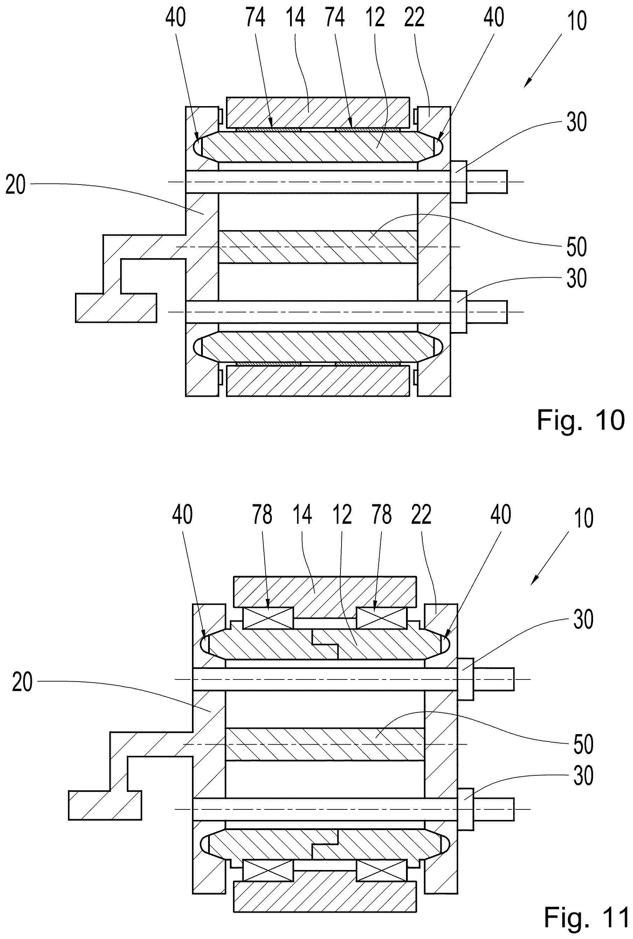

In Fig. 10 ist eine weitere Variante der Befestigung der beiden Wandelemente 20, 22 aneinander gezeigt, welche auf der Gestaltung von Fig. 7 basiert. Es werden nur Unterschiede erläutert. Die Ölführung entfällt in der gezeigten Variante, kann aber in anderen Varianten vorhanden sein. Die Hülse 50 ist als massiver Stift ausgebildet, wie bei der Gestaltung gemäß Fig. 2. Die Spannelemente 30 sind in das erste Wandelement 20 eingeschraubt und liegen an dem zweiten Wandelement 22 außenseitig mit deren Kopf an. Ein Konterelement 32 entfällt. Die Spannelemente 30 sind radial zwischen der Hülse 50 und dem Planetenbolzen 12 angeordnet.

Fig. 11 zeigt eine weitere Variante, welche auf der Gestaltung von Fig. 10 basiert. Es werden nur Unterschiede erläutert. Der Planetenbolzen 12 ist hier zweiteilig ausgebildet. Zudem sind statt Gleitlagern 74 nun Wälzlager 78 zur Lagerung der Planetenräder 14 an den Planetenbolzen 12 vorgesehen. Eine axiale Abstützung der Planetenräder 14 an den beiden Wandelementen 20, 22, beispielsweise durch ein Wälzlager oder Gleitlager entfällt. Stattdessen führen die Wälzlager 78 die Planetenräder 14 axial, wobei sich ein Innenring der Wälzlager 78 an Absätzen des Planetenbolzens 12 abstützt. Ein erstes Teil des Planetenbolzens 12 ist in dem Sitz 40 an dem ersten Wandelement 20 angeordnet und bildet einen Absatz an einem entgegengesetzten axialen Endbereich aus. Ein zweiter Teil des Planetenbolzens 12 liegt an diesem Absatz mit einem korrespondierenden Absatz an und ist in dem Sitz 40 an dem zweiten Wandelement 22 angeordnet. Die Teilung des Planetenbolzens 12 ist hier axial mittig. In anderen Ausführungsformen ist die Teilung nicht in einer axialen Mitte.

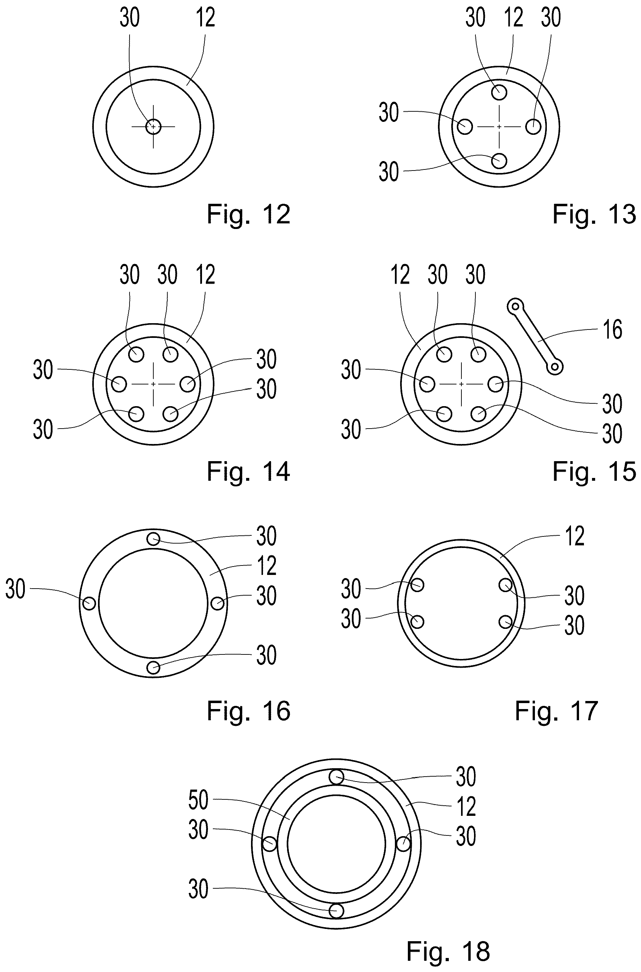

Fig. 12 bis Fig. 18 veranschaulichen verschiedene Anordnungen der Spannelemente 30 relativ zu den Planetenbolzen 12. In der Variante von Fig. 12 ist pro Planetenbolzen 30 ein zentral in der Durchgangsöffnung des Planetenbolzens 12 angeordnetes Spannelement 30 vorgesehen. In der Variante von Fig. 13 sind pro Planetenbolzen 30 vier gleichmäßig beabstandete Spannelemente 30 in der Durchgangsöffnung des Planetenbolzens 12 auf einem gemeinsamen Radius angeordnet. In der Variante von Fig. 14 sind pro Planetenbolzen 30 statt vier sechs gleichmäßig beabstandete Spannelemente 30 in der Durchgangsöffnung des Planetenbolzens 12 auf einem gemeinsamen Radius angeordnet. Fig. 15 veranschaulicht zusätzlich die Position eines Brückenelements 16 radial außen zu dem Planetenbolzen 12 und ist sonst identisch zu Fig. 14. In der Variante von Fig. 16 sind vier Spannelemente 30 in der Wandung des Planetenbolzens 12 in zugeordneten Durchgangsöffnungen angeordnet, wie auch in Fig. 2 gezeigt. In der Variante von Fig. 17 sind die vier Spannelemente 30 nicht gleichmäßig beabstandet innerhalb des Planetenbolzens 12 angeordnet. In der Variante von Fig. 18 sind die vier gleichmäßig voneinander beabstandeten Spannelemente 30 radial zwischen der als hohler Schaft ausgebildeten Hülse 50 und dem Planetenbolzen 12 angeordnet.

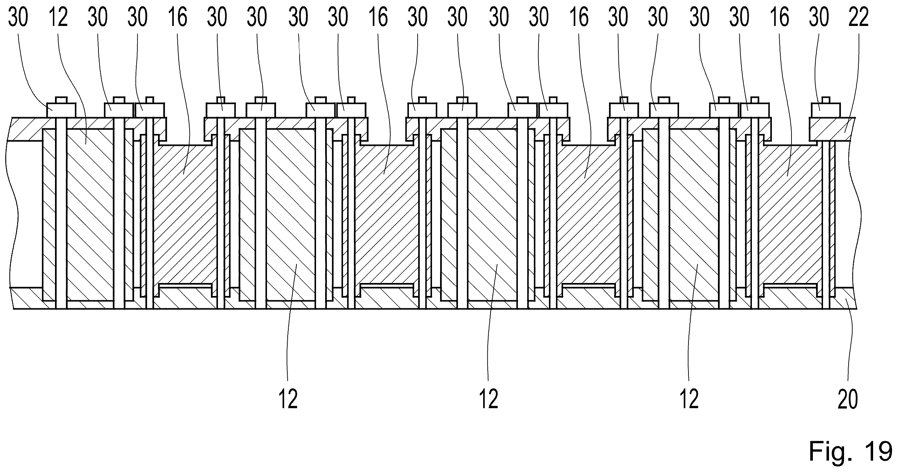

Die Figs. 19 bis 22 veranschaulichen in einer entrollten Darstellung jeweils unterschiedliche Befestigungskonfigurationen für die Brückenelemente 16 und die Planetenbolzen 12.

In der Variante von Fig. 19 werden die Spannelemente 30 im Bereich der Planetenbolzen 12 zur Montage einseitig durch das zweite Wandelement 22 gesteckt und in einer korrespondierenden Gewindebohrung des ersten Wandelements 20 verschraubt. Die Brückenelemente 16 werden analog an jedem Endbereich in Umfangsrichtung durch die Spannelemente 30 eingespannt.

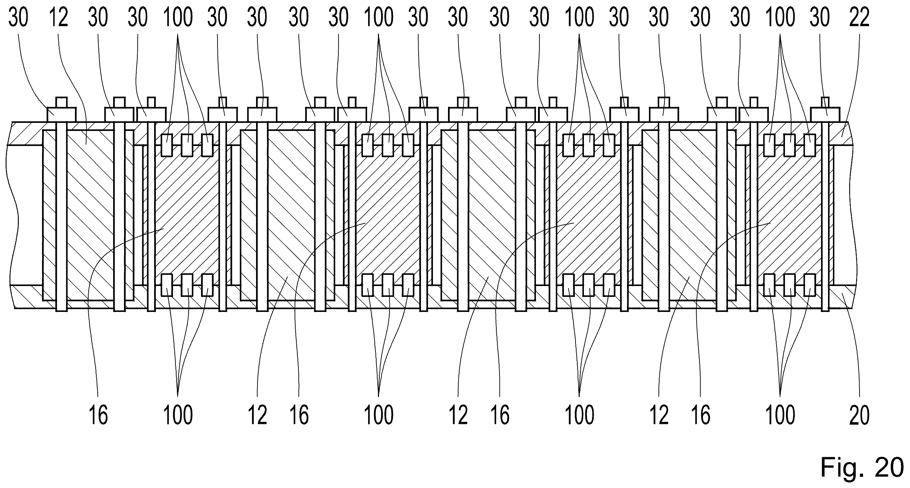

In der Variante von Fig. 20 sind zusätzlich Passstifte 100 vorgesehen, welche in korrespondierende Sacklochbohrungen des Brückenelements 16 und einer der beiden Wandelemente 20, 22 eingesetzt sind.

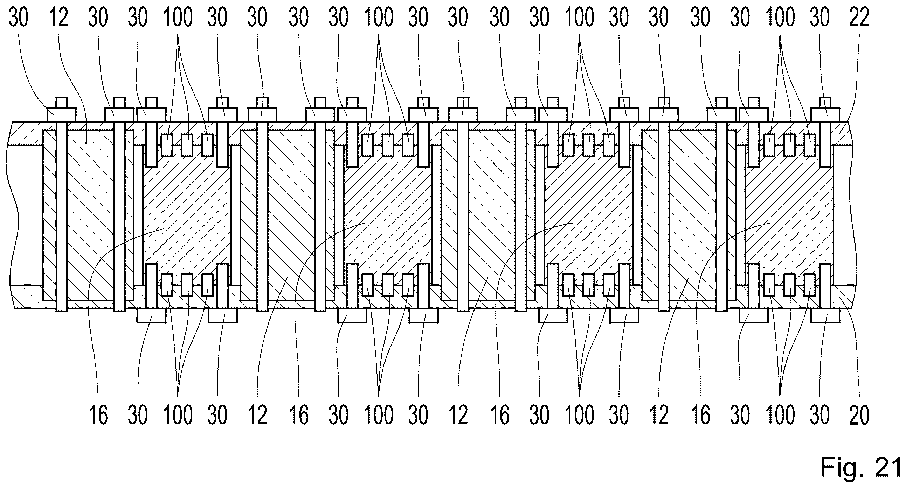

In der Variante von Fig. 21 sind die Brückenelemente 16 nun axial beidseitig durch Spannelemente 30 verschraubt. Die Spannelemente 30 im Bereich der Brückenelemente 16 sind jeweils durch korrespondierende Durchgangsöffnungen eines der beiden Wandelemente 20, 22 geführt und in einer Gewindebohrung des Brückenelements 16 eingeschraubt.

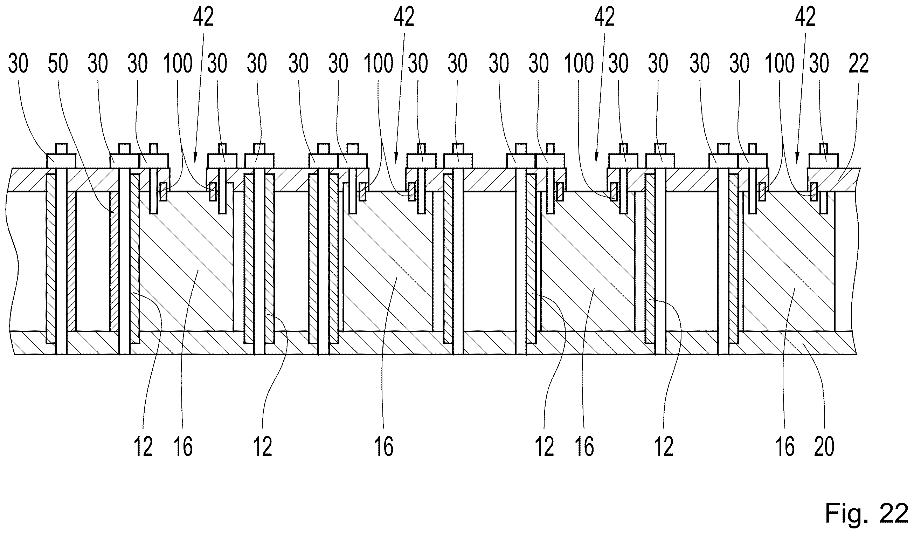

In der Variante von Fig. 22 sind die Brückenelemente 16 einstückig als Teil des ersten Wandelements 20 ausgebildet statt als separate Bauteile. Die Brückenelemente 16 sind dann an dem zweiten Wandelement 22 durch Spannelemente 30 verschraubt. Die Spannelemente 30 im Bereich der Brückenelemente 16 sind jeweils in einer Durchgangsöffnung des zweiten Wandelements 22 angeordnet und in einer Gewindebohrung mit dem Brückenelement 16 verschraubt. Zudem sind nun nur auf Seite des zweiten Wandelements 22 zwischen dem Brückenelement 16 und dem zweiten Wandelement 22 zwei Passstifte 100 pro Brückenelement 16 vorgesehen.

Zusätzlich ist in Fig. 22 bei einem der Planetenbolzen 12 die Hülse 50 dargestellt. Damit wird veranschaulicht, dass bei jeder der Varianten von Fig. 19 bis Fig. 22 auch die Hülse 50 innerhalb jedes Planetenbolzens 12 angeordnet sein kann. Die Planetenbolzen 12 sind dann in der Variante von Fig. 19 bis 22 als hohler Schaft ausgebildet und nicht als massiver Bolzen, wie dargestellt.

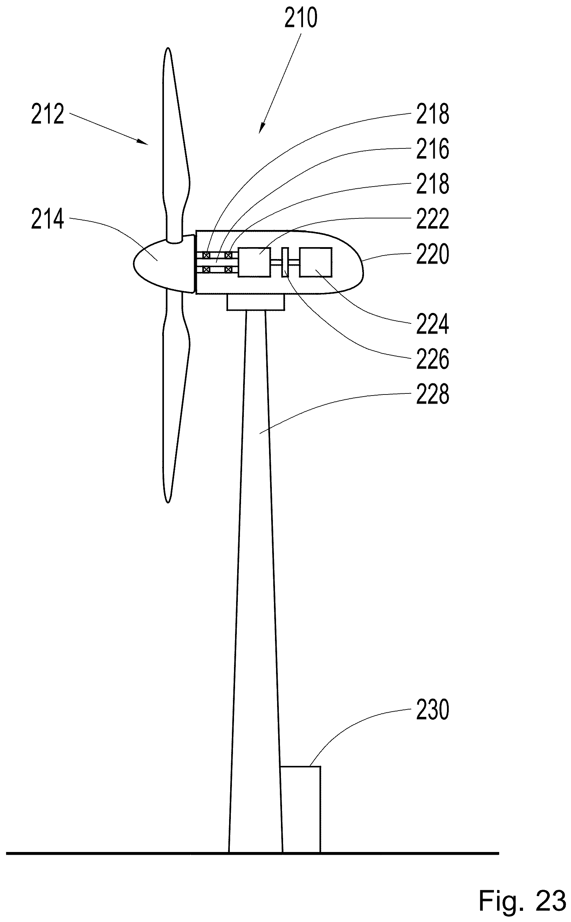

Fig. 23 veranschaulicht eine Windkraftanlage 210 mit einem Getriebe 222, bei welchem der Planetenträger 10 gemäß einer der in Bezug auf Figs. 1 bis 22 beschriebenen Ausführungsformen als Teil eines Planetenradsatzes verbaut sein kann. Die Windkraftanlage 210 weist einen Rotor 212 auf, welcher über eine Nabe 214 an einer Rotorwelle 216 gehalten ist. Die Drehachse der Rotorwelle 216 erstreckt sich im Wesentlichen horizontal. Die Rotorwelle 216 ist über zwei Wälzlager 218 in einer Gondel 220 gelagert. Dafür ist ein Gehäuse vorgesehen, welches an einem Maschinenbett der Gondel 220 befestigt ist. Die Rotorwelle 216 ist über das Getriebe 222 mechanisch mit einem Generator 224 wirkverbunden. In dem gezeigten Beispiel ist der Planetenträger 10 permanent drehfest mit der Rotorwelle 216 verbunden. In der Wirkverbindung zwischen Getriebe 222 und Generator 224 ist noch eine Bremse 226 angeordnet, welche auf eine Eingangswelle des Generators 224 wirkt. Die Gondel 220 ist drehbar an einem oberen Ende eines Turms 228 gelagert, welcher am Boden verankert ist. Die Windkraftanlage 210 ist in einer Ausführungsform als Off-Shore Anlage ausgebildet. Neben dem Turm 228 weist die Windkraftanlage 210 noch einen Netzanschluss 230 auf.

### Bezugszeichen

- 10: Planetenträger
- 12: Planetenbolzen
- 14: Planetenrad
- 16: Brückenelemente
- 20: Erstes Wandelement
- 22: Zweites Wandelement
- 30: Spannelement
- 32: Konterelement
- 40: Sitz
- 42: Ausnehmung
- 50: Hülse
- 70: Sonnenrad
- 72: Wälzlager
- 74: Gleitlager
- 76: Ölkanal
- 78: Wälzlager
- 80: Ölkanal
- 82: Radiale Durchgangsöffnung
- 84: Axiale Durchgangsöffnung
- 86: Ölverteilungsring
- 88: Ölreservoir
- 90: Axiale Durchgangsöffnung
- 92: Radialer Kanal
- 200: Windkraftanlage
- 212: Rotor
- 214: Nabe
- 216: Rotorwelle
- 218: Wälzlager
- 220: Gondel
- 222: Getriebe
- 224: Generator
- 226: Bremse
- 228: Turm
- 230: Netzanschluss
- 100: Passstifte
- 500: Planetenträger
- 502: Erstes Wandelement
- 504: Zweites Wandelement
- 506: Brückenelement
- 508: Planetenrad
- 510: Planetenbolzen

## Patentansprüche

1. Planetenträger (10) für einen Planetenradsatz mit einem ersten Wandelement (20), einem zweiten Wandelement (22) und einem Planetenbolzen (12), wobei der Planetenbolzen (12) dazu ausgebildet ist, daran drehbar ein Planetenrad (14) zu lagern, wobei die Wandelemente (20, 22) mit wenigstens einer Spannvorrichtung (30) aneinander befestigt sind, und wobei der Planetenbolzen (12) zwischen den beiden Wandelementen (20, 22) durch die Spannvorrichtung (30) eingespannt ist.

2. Planetenträger (10) nach Anspruch 1, **dadurch gekennzeichnet, dass** der Planetenbolzen (12) als hohler Schaft ausgebildet ist.

3. Planetenträger (10) nach Anspruch 2, **dadurch gekennzeichnet, dass** ein Spannelement (30) der Spannvorrichtung innerhalb des Planetenbolzens (12) angeordnet ist.

4. Planetenträger (10) nach Anspruch 2 oder 3, **dadurch gekennzeichnet, dass** der Planetenträger (10) eine Hülse (50) aufweist, welche innerhalb des Planetenbolzens (12) angeordnet ist.

5. Planetenträger (10) nach Anspruch 4, **dadurch gekennzeichnet, dass** der Planetenträger (10) eine Ölführung zu der Lagerung des Planetenrads (14) an dem Planetenbolzen (12) ausbildet, wobei ein Ölkanal (80) der Ölführung zwischen dem Planetenbolzen (12) und der Hülse (50) und für eine aktive Schmierung der Lagerung des Planetenrads (14) ausgebildet ist.

6. Planetenträger (10) nach Anspruch 5, **dadurch gekennzeichnet, dass** innerhalb der Hülse (50) ein Ölreservoir (88) für eine passive Schmierung ausgebildet ist.

7. Planetenträger (10) nach einem der vorhergehenden Ansprüche, **dadurch gekennzeichnet, dass** der Planetenbolzen (12) zweiteilig ausgebildet ist.

8. Planetenträger (10) nach einem der vorhergehenden Ansprüche, **dadurch gekennzeichnet, dass** das erste Wandelement (20) einen ersten Sitz (40) ausbildet, an welchem der Planetenbolzen (12) angeordnet ist, und das zweite Wandelement (22) einen zweiten Sitz (40) ausbildet, an welchem der Planetenbolzen (12) angeordnet ist.

9. Planetenträger (10) nach einem der vorhergehenden Ansprüche, **dadurch gekennzeichnet, dass** der jeweilige Sitz (40) als eine Vertiefung in einer dem Planetenbolzen (12) zugewandten Seite des jeweiligen Wandelements (20, 22) ausgebildet ist.

10. Planetenträger (10) nach Anspruch 9, **dadurch gekennzeichnet, dass** sich der jeweilige Sitz (40) von dem Planetenbolzen (12) weg verjüngt.

11. Planetenträger (10) nach einem der vorhergehenden Ansprüche, **dadurch gekennzeichnet, dass** der Planetenträger (10) ein Brückenelement (16) aufweist, welches zwischen den beiden Wandelementen (20, 22) durch die Spannvorrichtung eingespannt ist, wobei das Brückenelement (16) radial außen zu dem Planetenbolzen (12) angeordnet ist.

12. Planetenträger (10) nach Anspruch 11, **dadurch gekennzeichnet, dass** das Brückenelement (16) in Umfangsrichtung beabstandet zu dem Planetenbolzen (12) angeordnet ist.

13. Planetenträger (10) nach Anspruch 11 oder 12, **dadurch gekennzeichnet, dass** zwischen wenigstens einem der beiden Wandelemente (20, 22) und dem Brückenelement (16) ein Passstift (100) angeordnet ist.

14. Planetenträger (10) nach einem der vorhergehenden Ansprüche, **dadurch gekennzeichnet, dass** der Planetenträger (10) wenigstens zwei in Umfangsrichtung voneinander beabstandete Planetenbolzen (12) aufweist, wobei das erste Wandelement (20) im Umfangsbereich zwischen den zwei Planetenbolzen (12) eine Ausnehmung aufweist.

15. Planetenradsatz für ein Getriebe (222), wobei der Planetenradsatz wenigstens einen Planetenträger (10) nach einem der vorhergehenden Ansprüche aufweist.

16. Windkraftanlage (210) mit einem Getriebe (222), welches den Planetenträger (10) nach einem der Ansprüche 1 bis 14 oder den Planetenradsatz nach Anspruch 15 aufweist.
